(19) Europäisches Patentamt
European Patent Office
Office européen des brevets

(11) **EP 4 350 331 A1**

(12) **EUROPEAN PATENT APPLICATION**
published in accordance with Art. 153(4) EPC

(43) Date of publication:
**10.04.2024 Bulletin 2024/15**

(51) International Patent Classification (IPC):
***G01N 21/65*** (2006.01)

(21) Application number: **22841976.8**

(52) Cooperative Patent Classification (CPC):
**G01N 21/65**

(22) Date of filing: **30.06.2022**

(86) International application number:
**PCT/JP2022/026354**

(87) International publication number:
**WO 2023/286632 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021 JP 2021116435**

(71) Applicant: **CANON KABUSHIKI KAISHA**
**Tokyo 146-8501 (JP)**

(72) Inventors:
• **ICHIHARA, Shigeru**
**Tokyo 146-8501 (JP)**
• **SHIGEHARA, Yasuhisa**
**Tokyo 146-8501 (JP)**
• **ITO, Nobuhiro**
**Tokyo 146-8501 (JP)**

(74) Representative: **WESER & Kollegen**
**Patentanwälte PartmbB**
**Radeckestraße 43**
**81245 München (DE)**

(54) **IDENTIFICATION DEVICE**

(57) An imaging unit configured to capture an optical spectrum dispersed by a spectroscopic unit to acquire a spectral image and the identification apparatus configured to identify a property of an object based on a spectral image includes a correction unit configured to correct information about a wavenumber shift corresponding to a spectral image, based on wavelength information about a wavelength of a primary light.

**FIG.1**

## Description

### Technical Field

The present invention relates to an identification apparatus that identifies an object.

### Background Art

There has been a growing concern about environmental issues in recent years. For example, techniques for identifying types of resin materials derived from disused automobiles and disused home appliances and separating the resin materials have been discussed. By irradiating unknown objects with various electromagnetic waves, such as X-rays, ultraviolet rays, visible rays, and infrared rays, and dispersing electromagnetic waves emitted from the object, object types and the like can be identified. In particular, Raman scattering spectroscopy using laser light as a light source can measure a wide variety of objects ranging from inorganic to organic substances, and usage as an identification apparatus is being discussed.

An identification apparatus that captures an image formed from Raman scattered light of an object dispersed with a spectroscopic element by using an image sensor has been known. Japanese Patent Application Laid-Open No. 2008-209128 discusses an identification apparatus including a laser light source for irradiating an object with primary light, a spectroscopic element that disperses Raman scattered light from the object, and an image sensor that captures an optical spectrum projected from the spectroscopic element as a spectral image. The identification apparatus discussed in Japanese Patent Application Laid-Open No. 2008-209128 estimates a material by evaluating a degree of similarity based on the dichroic ratio of Raman shift peaks idiosyncratic to target substances on the corrected optical spectra of a known reference object and the object.

An identification apparatus using a technique for compensating a drop in identification performance because of a change in the detected optical spectrum due to a wavelength variation of primary light from a light source has been known. An identification apparatus discussed in Japanese Patent Application Laid-Open No. 2011-214917 includes a correction unit for correcting a wavenumber shift of an optical spectrum based on wavelength information that is about primary light and has been obtained using a reflected light component included in secondary light from an object.

### Citation List

#### Patent Literature

PTL 1: Japanese Patent Laid-Open No. 2008-209128

PTL 2: Japanese Patent Laid-Open No. 2011-214917

### Summary of Invention

#### Technical Problem

The identification apparatus discussed in Japanese Patent Application Laid-Open No. 2011-214917 is described to correct the wavenumber shift of the acquired optical spectrum, whereas the correction technique how the correction unit corrects the wavenumber shift over the entire horizontal axis of the optical spectrum is not clear.

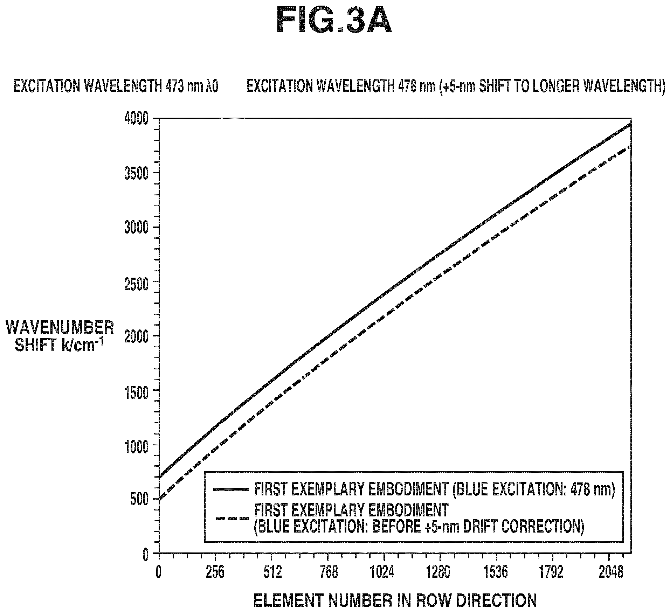

An element address where an image sensor receives light and the wavenumber shift corresponding to interaction of the spectral wavelength from the spectroscopic element with the object are in a nonlinear relationship. The needed amount of correction in the wavenumber shift for a wavelength variation of the primary light is thus nonlinear with respect to the element address as illustrated in Fig. 3A. Fig. 3A illustrates an example where when a blue semiconductor laser having an excitation wavelength of 478 nm varies in the excitation wavelength by 5 nm to longer wavelengths, the observation range of the wavenumber shift of 700 to 3800 $cm^{-1}$ on the wavenumber shift axis changes to lower wavenumbers of 480 to 3600 $cm^{-1}$. The wavelength variation may otherwise be referred to as a wavelength shift, a wavelength change, or a wavelength drift.

Since the identification apparatus discussed in Japanese Patent Application Laid-Open No. 2011-214917 estimates a variation in the excitation wavelength of the light source based on the secondary light of the object, the estimation accuracy of the excitation wavelength can be limited due to contamination of the object, secondary light from a conveyor belt, and mixing of objects. If such an excitation light wavelength estimation technique is applied to an identification apparatus for recovering resources, such as disused materials, the estimation accuracy is more prone to the limitations since the object size, cleanliness, and the mixing ratio with other materials vary greatly compared to when the technique is applied to shipping inspection of industrial products. If the correction to the wavenumber shift is insufficient because of a wavelength variation of the primary light, the rate of operation of the identification apparatus can drop because the identification performance is unable to be maintained. Since waste identification cost has a positive correlation with the reciprocal of the rate of operation of the identification apparatus, an identification apparatus that does not drop in the rate of operation even if the primary light varies in wavelength has been desired.

The present invention is directed to providing an identification apparatus that can acquire an accurate optical spectrum without a drop in the rate of operation even if a wavelength variation occurs in the excitation light from the light source.

Solution to Problem

An identification apparatus includes a placement unit configured to place an object thereon; an irradiation member optically coupled to a light source and configured to irradiate the object placed on the placement unit with primary light; a light collecting member configured to collect secondary light from the object, a spectroscopic unit configured to disperse the secondary light collected by the light collecting member; an imaging unit configured to capture an optical spectrum dispersed by the spectroscopic unit to acquire a spectral image, the identification apparatus being configured to identify a property of the object based on the spectral image, and a correction unit configured to correct information about a wavenumber shift corresponding to the spectral image based on wavelength information about a wavelength of the primary light.

Brief Description of Drawings

[Fig. 1] Fig. 1 is a diagram illustrating a schematic configuration of an identification apparatus according to a first exemplary embodiment.
[Fig. 2A] Fig. 2A is a diagram illustrating a schematic configuration of a spectral information acquisition unit according to the first exemplary embodiment.
[Fig. 2B] Fig. 2B is a diagram illustrating projection of an optical spectrum on an imaging unit.
[Fig. 2C] Fig. 2C is a diagram illustrating a change in a projection position of an optical spectrum observation domain with respect to a wavelength variation of primary light.
[Fig. 3A] Fig. 3A is a chart illustrating the effect of a variation in excitation wavelength on a wavelength shift according to a prior art.
[Fig. 3B] Fig. 3B is a chart illustrating the effect of correcting the wavelength shift according to the first exemplary embodiment.
[Fig. 4] Fig. 4 is a diagram illustrating a schematic configuration of an identification apparatus according to a second exemplary embodiment.
[Fig. 5] Fig. 5 is a diagram illustrating a schematic configuration of an identification apparatus according to a third exemplary embodiment.
[Fig. 6A] Fig. 6A is an XZ plane view of a two-view drawing illustrating a schematic configuration of an identification apparatus according to a fourth exemplary embodiment.
[Fig. 6B] Fig. 6B is an XY plane view of the two-view drawing illustrating the schematic configuration of the identification apparatus according to the fourth exemplary embodiment.

[Fig. 7A] Fig. 7A is a diagram illustrating a schematic configuration of an identification apparatus according to a fifth exemplary embodiment.
[Fig. 7B] Fig. 7B is a chart illustrating a correlation between an excitation wavelength and a light source temperature.

Description of Embodiments

Exemplary embodiments of the present invention will be described below with reference to the drawings.

<First Exemplary Embodiment>

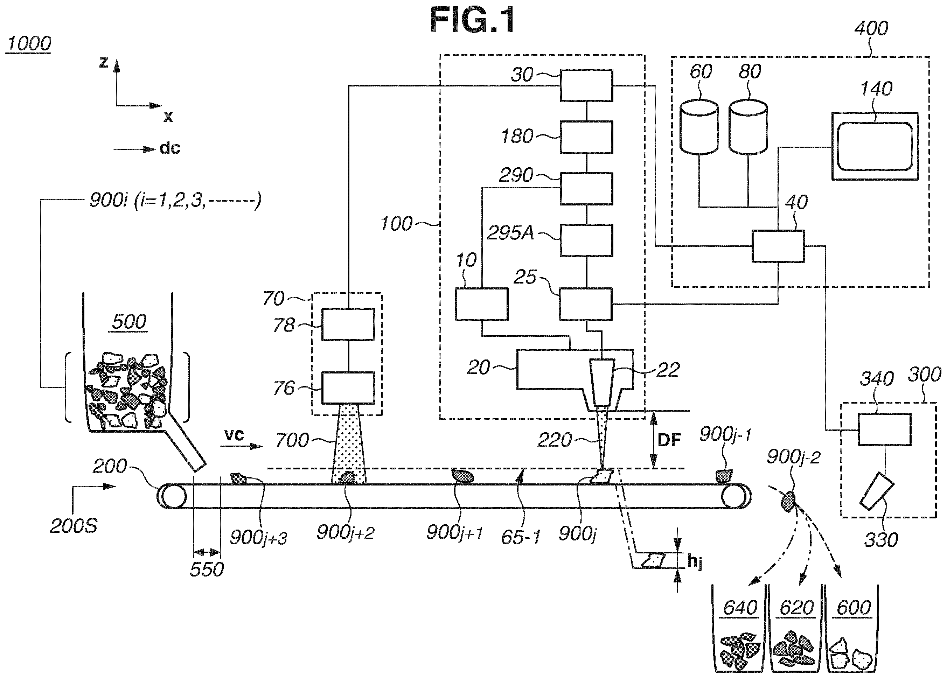

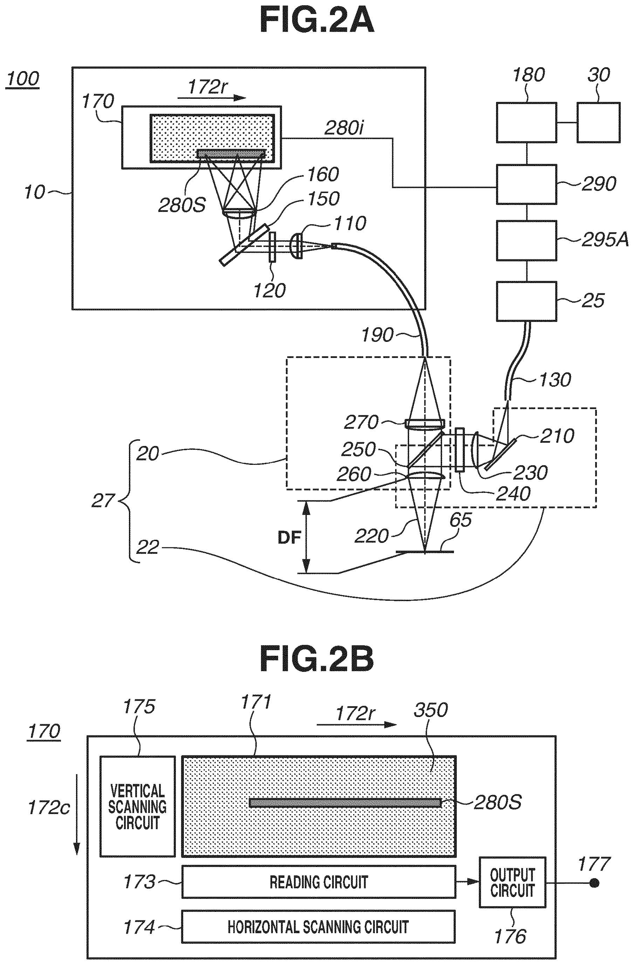

As illustrated in Fig. 1, an identification apparatus 1000 includes an irradiation member 22 that irradiates an object 900i conveyed in a conveyance direction dc with irradiation light 220 such that the irradiation light 220 is condensed on the object 900i. The object 900i is fed to a conveyance member 200 by a feeder 500, and conveyed along the conveyance direction dc by the conveyance member 200. The irradiation light 220 may be also referred to as focused light 220 or primary light 220.
As illustrated in Fig. 1, the identification apparatus 1000 also includes a light collecting member 20 that collects scattered light from the object 900i in a manner corresponding to the irradiation member 22. As illustrated in Fig. 1, the identification apparatus 1000 also includes an acquisition unit 30 that acquires identification information for identifying properties of objects 900i (i = 1, 2, 3, ...) based on the light collected by the light collecting member 20.
As illustrated in Fig. 1, the identification apparatus 1000 also includes the conveyance member 200 including a conveyor belt that conveys the objects 900i in an x direction at a conveyance speed vc, and a separation apparatus 300 downstream of the conveyance member 200 in the conveyance direction dc.
Next, a spectral information acquisition unit including a spectroscopic element and an imaging unit will be described with reference to Fig. 2A.

(Spectral Information Acquisition Unit)

The identification apparatus 1000 includes a spectral information acquisition unit 100 that acquires spectral information about the light received from the object 900i. The spectral information acquisition unit 100 is a unit that acquires a Raman shift corresponding to a wavenumber difference between Raman scattered light included in secondary light from the object 900i and excitation light included in the primary light, and the intensity of a spectral component corresponding to the Raman shift. As employed herein, a wavenumber shift may be also referred to as a Raman shift or a wavenumber difference.
As illustrated in Figs. 1 and 2A, the spectral information acquisition unit 100 includes the irradiation member 22 that irradiates the object 900i with the irradiation light 220 and the light collecting member 20 that collects the secondary light from the object 900i. The irradiation member 22 and the light collecting member 20 according to the present exemplary embodiment are coaxially arranged. The irradiation member 22 is optically coupled to a light source 25 including a laser light source via an optical fiber 130. The light collecting member 20 is optically coupled to a spectral image acquisition unit 10 so that the spectral information acquisition unit 100 can acquire optical information reflecting the materials contained in the object 900i.

(Light Receiving Unit)

Fig. 2A is a diagram schematically illustrating an example of a configuration of the spectral information acquisition unit 100. The spectral information acquisition unit 100 includes a light receiving unit 27 including the irradiation member 22 that irradiates the object 900i with light and the light collecting member 20 that collects the Raman scattered light from the object 900i. The irradiation member 22 and the light collecting member 20 are coaxially arranged on an object side (target object side) as viewed from a dichroic mirror 250. A positional deviation is thus less likely to occur between the center of the irradiation spot and the center of the beam of the scattered light to be received even if the irradiated surface of the object 900i has a level difference or tilt.

(Irradiation Member)

As illustrated in Fig. 1, the irradiation member 22 is disposed above the conveyance member 200 at a predetermined distance WD from a conveyance surface 200S of the conveyor belt.
The irradiation member 22 is arranged to focus the irradiation light 220 toward an upper surface of the object 900i, whereby the scattering intensity of Raman scattered light that is several digits weaker than Rayleigh scattered light is increased. A unit including the irradiation member 22 and the light source 25 may be referred to as an irradiation optical system.
As illustrated in Fig. 2A, the irradiation member 22 includes an objective lens 260, the dichroic mirror 250, a collimating lens 230, a cylindrical lens, and a reflection mirror 210. A convex lens, a collimating lens, a concave lens, a zoom lens, or the like is employed as the objective lens 260.
Synthetic quartz can be used as the lens material of the collimating lens 230, the cylindrical lens 240, the objective lens 260, etc. These lenses are irradiated with and transmit high output light from a semiconductor laser 25. The use of the lenses made of synthetic quartz can reduce background components including fluorescence and Raman scattered light deriving from the lens material.

In the irradiation member 22, the objective lens 260 functions as a condenser lens that condenses the light from the laser light source 25 on the object 900i. The objective lens 260 forms a focal plane 65, a not-illustrated focal point (focal spot) having a focus diameter $\varphi$, and a focal depth $\Delta DF$ at a position a focal length DF away from the objective lens 260 for a numerical aperture NA.
The collimator lens 230 and the cylindrical lens 240 reduce spreading of the light emitting from the laser light source 25 and shape the emitted light into a parallel beam. Other collimating optical elements, such as an anamorphic prism pair, may be used as the cylindrical lens 240. The irradiation member 22 may include a wavelength filter, such as a laser line filter, at the pupil position. This can improve the wavelength characteristics of the light with which the irradiation member 22 irradiates the object 900i.
As illustrated in Fig. 2A, at least a part of the irradiation member 22 can be shared with the light collecting member 20. Since the light collecting member 20 and the irradiation member 22 of the present exemplary embodiment are coaxially arranged, the objective lens 260 and the dichroic mirror 250 are shared between the light collecting member 20 and the irradiation member 22.

(Light Source)

The light source 25 is a light source that irradiates a placement unit 200 or the object 900i placed on the placement unit 200 with excitation light via the optical fiber 130 and the irradiation member 22. In other words, the light source 25 is optically coupled to the irradiation member 22 via the optical fiber 130. In the identification apparatus 1000 for dispersing Raman scattered light, a laser light source having a wavelength of 400 to 1100 nm is used as the light source 25. In Raman scattering, the shorter the wavelength is, the higher the excitation efficiency becomes. The longer the wavelength is, the less the background fluorescence component becomes.
The excitation wavelength of the laser light source applied to the light source 25 is desirably selected so that the Raman shift between an intended target material and non-target materials becomes clear. At least one of 532, 633, 780, and 1064 nm can be used. While the semiconductor laser 25 is described to be used as the light source of the irradiation member 22, this is not restrictive and other laser light sources, such as a semiconductor pumped solid-state laser and a gas laser can be used. The light source 25 of the present exemplary embodiment includes an output unit that outputs wavelength information about the excitation light in a manner readable to other devices.

(Light Collecting Member)

The light collecting member 20 is disposed above the conveyance surface 200S so that the secondary light from the upper surface of the object 900i conveyed by the conveyance member 200 can be collected. In other words, the light collecting member 20 is disposed at a position above the conveyance member 200 corresponding to the area of irradiation with the irradiation light 220 from the irradiation member 22 so that the secondary light from the upper surface of the object 900i passing through the area of irradiation can be collected.

The light collecting member 20 includes the objective lens 260, the dichroic mirror 250, an imaging lens 270, and an optical fiber 190. Like the irradiation member 22, the objective lens 260 of the light collecting member 20 may include a convex lens, a collimating lens, a convex lens, and/or a zoom lens. To reduce light unwanted in spectrometry, the light collecting member 20 may include a wavelength filter, such as a band-pass filter or a long-pass filter, for reducing an excitation light component included in the primary light.

For sufficient light collection efficiency, the light collecting member 20 uses an objective lens having a large numerical aperture. For a sufficient working distance and focal depth, the light collecting member 20 uses an objective lens having a small numerical aperture. The numerical aperture of the objective lens of the light collecting member 20 may be 0.1 or more and 0.5 or less. More specifically, SCHOTT B-270 having an effective lens diameter of $\varphi$25 mm, a focal length of 20 mm, and a numerical aperture of 0.5 can be used as the objective lens.

(Spectral Image Acquisition Unit)

As illustrated in Fig. 2A, the spectral image acquisition unit 10 includes, in order from the light collecting member 20, a branching unit 195, an imaging lens 110, a band-bass filter 120, a spectroscopic unit 150, and an imaging unit 170. The spectroscopic unit 150 is each disposed to disperse the light collected by the light collecting member 20 and project a continuous spectrum on the imaging unit 170 in a row direction or column direction of a light receiving element array of the imaging unit 170 via an imaging lens 160.

In the present exemplary embodiment, as illustrated in Figs. 2A and 2B, an optical spectrum 280s is projected on the imaging unit 170 along a light receiving elements 350 arranged in a row direction 172r. Fig. 2B is a diagram illustrating the projection of the optical spectrum 280s on the imaging unit 170.

To project a spectral image on an effective imaging area of the imaging unit 170 with improved use efficiency, a grating period and a center wavelength of the spectroscopic unit 150 may be optimized as appropriate in accordance with the wavenumber band of projection. Here, the imaging unit 170 is disposed at an optimum position in consideration of the emission angle from the spectroscopic unit 150, the diffraction efficiency and wavenumber resolution of the spectroscopic unit 150, etc.

(Imaging Unit)

An imaging device, such as a charge-coupled device (CCD) and complementary metal-oxide-silicon (CMOS) imaging devices, including a two-dimensional array of light receiving elements is employed as the imaging unit 170. The plurality of light receiving elements 350 of the imaging unit 170 according to the present exemplary embodiment is arranged in a matrix. In the case of a delta arrangement or like, the row and column directions are associated with the directions of two of the three axes, or associated with the direction of one of the three axes and a combined direction of the remaining two.

Here, the identification apparatus 1000 identifies the properties of the object 900i while conveying the object 900i using the conveyance member 200, and performs separation of the object 900i based on the identification result using the separation apparatus 300 to be described below. To improve the throughput of the separation processing by the identification apparatus 1000, the conveyance speed vc of the conveyance member 200 is desirably increased. The optical spectrum 280s projected on the imaging unit 170 derives from the Raman scattered light occurring from the object 900i moving on the conveyance surface 200S. The optical spectrum 280s is projected on the imaging unit 170 while the object 900i being conveyed lies within the area of irradiation with the irradiation light 220 (focused light 220) from the irradiation member 22. For example, if the conveyance speed vc by the conveyance member 200 is 2 m/sec and the length of the object 900i in the conveyance direction dc is 10 mm, the time during which the imaging unit 170 can detect the spectral image formed by the Raman scattered light occurring from the object 900i is 5 milliseconds or less. The imaging unit 170 therefore desirably has a high framerate. Among examples of such a high-framerate imaging unit is a CMOS image senor. The imaging unit 170 is therefore desirably a CMOS image sensor.

As described above, the intensity of the Raman scattered light occurring from the object 900i is extremely low, and thus the intensity of the light incident on each of the light receiving elements 350 of the imaging unit 170 is also extremely low. An image sensor having high sensitivity in the wavenumber area where a spectral image corresponding to the optical spectrum 280s is acquired is therefore desirably used as the imaging unit 170. Rolling shutter image sensors typically have a simple pixel configuration and a high aperture ratio and can include large photoelectric conversion elements compared to global shutter image sensors, and can thus be enhanced in sensitivity and dynamic range. Since the pixel structure is simple, rolling shutter image sensors also have an advantage of low cost compared to global shutter image sensors. For such reasons, in the present exemplary embodiment, a rolling shutter CMOS image sensor is used as the imaging unit 170.

A rolling reset image sensor that sequentially performs reset operations row by row of the array of light receiving elements 350 can be employed as the imaging unit 170. This can maximize the exposure time of each row of the array of light receiving elements 350, which improves the sensitivity.

As illustrated in Fig. 2B, the imaging unit 170 has a crop read function for read operations on specific rows in a light receiving member 171 where the light receiving elements 350 are two-dimensionally arranged in the row direction 172r and a column direction 172c. This enables read operations on specific rows in the light receiving member 171 corresponding to the light collecting member 20 when a form information acquisition unit 70 to be described below detects that the object 900i reaches a light collectable area of the light collecting member 20.

The imaging unit 170 includes a reading circuit 173, a horizontal scanning circuit 174, a vertical scanning circuit 175, and an output circuit 176, and sequentially reads signals from the plurality of pixels arranged in a matrix row by row. The vertical scanning circuit 175 selects and drives a certain row in the light receiving member 171. The reading circuit 173 reads the signals output from the pixels in the row selected by the vertical scanning circuit 175, and transfers the signals to the output circuit 176 under control of the horizontal scanning circuit 174. This implements a read in a main scanning direction (row direction). The vertical scanning circuit 175 shifts the row to be selected, and the reading circuit 173 performs the read in the main scanning direction under the control of the horizontal scanning circuit 174. Such an operation is repeated with shifting the row to be selected in a sub scanning direction (column direction), whereby the signals can be read from the entire light receiving member 171. The read signals are output to a correction unit 290 disposed outside the imaging unit 170 as output signals via an output terminal 177 of the output circuit 176. Here, the scanning in the main scanning direction is performed at high speed. The scanning in the sub scanning direction is slower than the scanning in the main scanning direction.

The imaging lens 110 transforms branched light transmitted through the optical fiber 190 from the light collecting member 20 and one of optical fibers 190 from the branching unit 195 into respective parallel beams. The optical fibers 190 may be also referred to as branching light guide units 190. The band-bass filter 120 attenuates an excitation light component included in the received light and transmits part of a Raman scattered light component. The band-bass filter 120 has a spectral transmission characteristic of attenuating Raman scattered light at both higher and lower wavenumbers. The spectroscopic unit 150 disperses the received light into wavelength components in a fan-like fashion. The imaging lens 160 projects the light dispersed by the spectroscopic unit 150 on the imaging unit 170. The spectroscopic unit 150 is a transmissive diffraction grating. A reflective diffraction grating can also be used as the diffraction grating, in which case a spectroscopic element of Roland arrangement or Czemy-Tumer system is employed. The spectroscopic unit 150 may be referred to as a diffraction grating 150.

The imaging unit 170 acquires spectral information Si about the object 900i in consideration of the captured spectral image, the photoelectric conversion characteristics of the image sensor included in the imaging unit 170, the transmission characteristics of the optical system, etc. The spectroscopic unit 150 may also acquire polarization information including circular dichroism and optical rotatory dispersion in addition to the optical spectrum.

(Material Information Reference Unit)

The spectral information acquisition unit 100 include a material information reference unit 180 that acquires material information about the object 900i based on spectral information Si that is acquired by the spectral image acquisition unit 10 and a wavenumber shift of which is corrected by the correction unit 290 to be described below. The material information reference unit 180 refers to a not-illustrated material database containing reference data on Raman scattered light, and acquires material information Mi identifying the materials included in the object 900i based on a degree of similarity between the spectral information Si and reference data. The spectral information acquisition unit 100 stores at least either one of the spectral information Si and the material information Mi in a first storage unit 60 via a command unit 40 to be described below.

The material database for the material information reference unit 180 to refer to may be one stored in a local server included in the identification apparatus 1000. The material database may be a remote server accessible via the Internet or an intranet.

In the above-described manner, the spectral information acquisition unit 100 can acquire the material information Mi about the materials and additives included in the object 900i, the mixing of impurity components, etc.

(Form Information Acquisition Unit)

As illustrated in Fig. 1, the form information acquisition unit 70 includes a camera 76 disposed with its imaging field of view 700 overlapping the conveyance member 200, and an image processing unit 78 that performs image processing on an object image captured by the camera 76, and acquires form information Fi about the object 900i. Like the material information Mi, the form information Fi is information about the properties of the object 900i.

The image processing unit 78 performs image processing including contrast and contour extraction, and acquires the length in the conveyance direction, reflection color, shape, a degree of material mixing, and the like of each object 900i. The image processing unit 78 can be said to be an element that performs processing for acquiring information related to the size of each object 900i. The form information acquisition unit 70 can include a not-illustrated photointerrupter or laser interferometer instead of the camera 76. The form information acquisition unit 70 may be also referred to as an imaging unit. The form information acquisition unit 70 is an element selectively employed for the identification apparatus 1000.

(Acquisition Unit)

The acquisition unit 30 acquires identification information Di about each object 900i for determination of whether the object 900i is a target object or a non-target object. The acquisition unit 30 outputs the acquired identification information Di to the command unit 40. As illustrated in Figs. 1 and 2A, the acquisition unit 30 acquires the identification information Di based on at least one of the material information Mi acquired by the material information reference unit 180, the spectral information Si in which the wavenumber shift is corrected by the correction unit 290, and the form information Fi acquired by the form information acquisition unit 70.

The acquisition unit 30 can be said to identify the properties of the object 900i based on a Raman spectrum included in the secondary light collected by the light collecting member 20. The acquisition unit 30 according to the present exemplary embodiment can also be said to identify the properties of each object 900i based on the object image acquired from the camera 76 and the Raman spectrum included in the secondary light collected by the light collecting member 20.

In a modification, the spectral information acquisition unit 100 and the form information acquisition unit 70 according to the present exemplary embodiment can be replaced with a hyper-spectral camera or a multi-band camera capable of acquiring the form information Fi and the spectral information Si from a captured image. In other words, the not-illustrated identification apparatus according to the modification can be said to include a detection system that acquires multi-dimensional data from which material information and form information can be read.

(Control Unit)

The identification apparatus 1000 includes a control unit 400 including the command unit 40 that controls a separation operation of the separation apparatus 300 based on the properties of each object 900i and a display unit 140 that provides a graphical user interface (GUI) where the user can specify control conditions. The control unit 400 further includes the first storage unit 60 storing the properties of each object 900i and a second storage unit 80 storing the control conditions of the separation operation. The command unit 40 includes a not-illustrated display control unit that displays a wavenumber shift-corrected spectral image 280ic of the object 900i, acquired by the acquisition unit 30 on the display unit 140. The display control unit (40) can display information about the amount of correction in the wavenumber shift on the display unit 140.

(Storage Unit)

The identification apparatus 1000 according to the present exemplary embodiment includes the first storage unit 60, the second storage unit 80, and a third storage unit 90 into/from which data related to the acquisition of the identification operation, the separation operation, and the spectral information can be stored and called. The first to third storage units may be integrated with each other, divided from each other, or disposed on a remote server to enable remote access.

The first storage unit 60 is configured to store the identification information Di, the material information Mi, the spectral information Si, and the form information Fi about each object 900i, and a time tp indicating when the object 900i passes through the irradiation area 220, in association with each other. The time tp may otherwise be referred to as timing tp.

The second storage unit 80 is configured to store the control conditions for controlling intensity Is of the separation operation by the separation apparatus 300, corresponding to the identification information Di for each object 900i. Possible formats of the control conditions include a table that can be referred to, algebraic general expressions, and machine-learned statistic information.

(Command Unit)

The command unit 40 estimates a processing area passage time at which each object 900i passes through the area where the separation apparatus 300 performs the separation processing on the object 900i in accordance with the materials and size of the object 900i based on the identification information Di from the acquisition unit 30, and generates commands to control the separation operation of the separation apparatus 300. The processing area passage time of the object 900i can be estimated based on at least one of the signals from the form information acquisition unit 70, the spectral information acquisition unit 100, and a not-illustrated object sensor disposed on the conveyance member 200.

(Separation Apparatus)

As illustrated in Fig. 1, the separation apparatus 300 includes an air nozzle 330 for discharging compressed air for a predetermined discharge time at predetermined discharge speed and predetermined discharge flowrate, and a separation control unit 350 that controls a not-illustrated solenoid valve included in the air nozzle 330. The separation control unit 350 accepts a control signal from the command unit 40 of the identification apparatus 100. The separation operation by the separation apparatus 300 according to the present exemplary embodiment includes an operation for discharging a fluid. The fluid of the discharging operation includes air, an inert gas such as dry nitrogen and a rare gas, a liquid, and a gas-liquid mixture fluid (aerosol). The separation apparatus 300 collects objects 900i into a target collection basket 620 and non-target collection baskets 600 and 640 in accordance with the properties of the objects 900i based on the control signal issued from the command unit 40.

The discharge device of the separation apparatus 300 for discharging the fluid may be replaced with a flap gate that opens and closes at a predetermined angular speed, a shutter that opens and closed at a predetermined speed, etc. The form information acquisition unit 70, the spectral information acquisition unit 100, and the separation apparatus 300 constituting the identification apparatus 1000, and the components thereof can be disposed in parallel at different positions in a conveyance width direction of the conveyance member 200 for system integration and high speed processing. The separation apparatus 300 can be regarded as a component of the identification apparatus 1000 and referred to as a separation unit 300.

(Conveyance Member)

The conveyance member 200 is a conveyance unit that conveys a plurality of objects 900i (i = 1, 2, ...) successively fed from the feeder 500 in the conveyance direction dc (in Fig. 1, x direction) at a predetermined conveyance speed vc. The conveyance member 200 constitutes the conveyance unit for conveying the objects 900i together with the feeder 500.

The conveyance member 200 according to the present exemplary embodiment includes the conveyor belt that conveys the objects 900i fed from the feeder 500 in the conveyance direction dc at the speed vc, and linearly conveys the objects 900i on the conveyance surface 200S. As a modification, the conveyance member 200 can be replaced with a turntable feeder that conveys objects spirally outward, a vibrating feeder including a vibrator for causing movement in a predetermined direction, and a conveyor roller including a plurality of rollers.

The conveyance member 200 can be referred to as a placement unit 200 for the form information acquisition unit 70 since the objects 900i are moved to pass through the imaging field of view 700 of the camera 76. Similarly, the conveyance member 200 can be referred to a placement unit 200 for the light collecting member 20 since the objects 900i are moved to pass through an effective light collection area 22R of the light collecting member 20.

In the present exemplary embodiment, the conveyance speed vc of 0.1 to 5 m/s can be applied to the conveyance member 200 in the case of a conveyor belt.

In a modification of the identification method using the identification apparatus 1000 according to the present exemplary embodiment, classification processing for filtering objects 900i by shape or size may be performed as preprocessing of the feeding step by the feeder 500. A vibrating conveyor, a vibrating sifter, a crushing size controller, or the like is used as the unit for performing the preprocessing.

(Wavelength Information Acquisition Unit)

Next, a wavelength information acquisition unit 295A that acquires wavelength information about the primary light for the correction unit 290 to be described below to refer to will be described with reference to Figs. 1 and 2A. In other words, the wavelength information acquisition unit 290 is an element for acquiring wavelength information about the excitation light.

The wavelength information acquisition unit 295A according to the present exemplary embodiment obtains information about the wavelength of the primary light 220 using the wavelength information about the excitation light output from the light source 25, and outputs the information to the correction unit 290 to be described below.

(Correction Unit)

Next, the correction unit 290 according to a feature of the identification apparatus 1000 of the present exemplary embodiment will be described with reference to Figs. 1, 2A, 2B, 2C, and 3B. The correction unit 290 corrects information about the wavenumber shift corresponding to the spectral image captured by the imaging unit 170 based on the wavelength information about the wavelength of the primary light from the irradiation member 22. The correction unit 290 in the identification apparatus 1000 corrects the wavenumber shift (Raman shift) of a spectral image 280i corresponding to the object 900i, based on wavelength information wi about the primary light. In other words, as illustrated in Figs. 1 and 2A, the correction unit 290 corrects the wavenumber shift of the spectral image 280i, based on the wavelength information wi about the primary light, acquired by the wavelength information acquisition unit 295A and the optical spectrum 280s acquired by the imaging unit 170 included in the spectral image acquisition unit 10.

When the excitation wavelength at a predetermined operating point serving as a reference of the light source 25 is λ10, the wavenumber shift corresponding to a predetermined molecular binding likely to be contained in the object is Δk, and the Raman shift resulting from the predetermined molecular binding at the predetermined operating point is À20, the following general expression (1) holds. The operating point of the light source 25 includes an operating temperature, a driving frequency, etc. The excitation wavelength λ10 at the predetermined operating point may be also referred to as an unchanged wavelength λ10 or a light source excitation

wavelength $\lambda 0$.
[Eq. 1]

General expression (1):

$$\Delta k = \frac{1}{\lambda 10} - \frac{1}{\lambda 20}$$

Similarly, consider the case where the operating point of the light source 25 moves and the excitation wavelength varies. When the wavelength of the primary light at the operating point varied from the reference operating point is $\lambda 1d$, the wavenumber shift corresponding to the predetermined molecular binding contained in the object is $\Delta k$, and the wavelength of the secondary light corresponding to the wavenumber shift is $\lambda 2d$, then the following general expression (2) holds.
[Eq. 2]

General expression (2):

$$\Delta k = \frac{1}{\lambda 1d} - \frac{1}{\lambda 2d}$$

When the ratio of change p in the wavelength of the primary light is $p = \lambda 1d/\lambda 10$, and the ratio of change q in the wavelength of the secondary light is $q = \lambda 2d/\lambda 20$, the ratio of variation q of the secondary light is then unambiguously expressed by general expression (3) using (p, $\lambda 10$, and $\Delta k$).
[Eq. 3]

General expression (3):

$$q = p\frac{1 - \lambda 10\Delta k}{1 - p\lambda 10\Delta k}$$

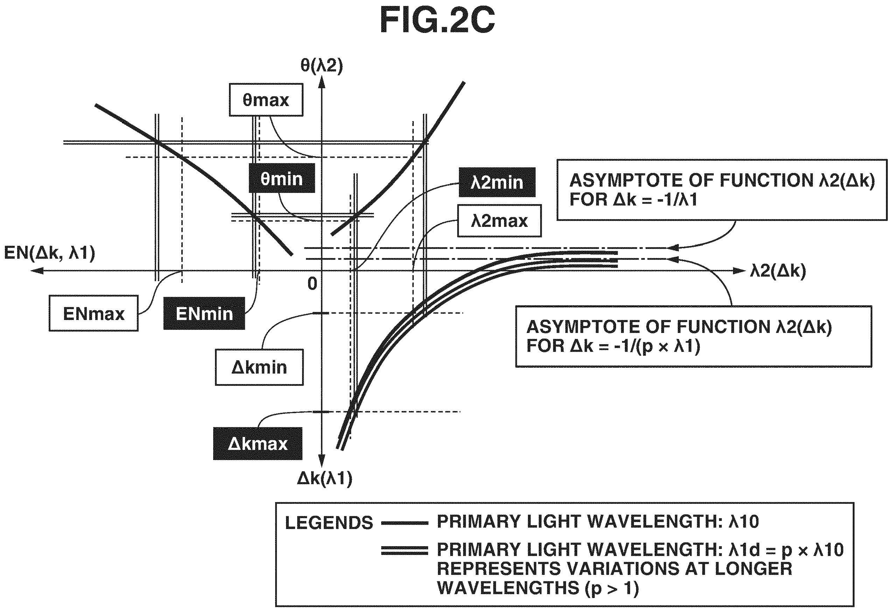

Note that $\times$ is a mathematical symbol representing a product. It can be seen that the ratio of change q in the wavelength of the secondary light does not have a constant value in the observation domain $\Delta k$ of the Raman spectrum ($\Delta kmim \le \Delta k \le \Delta kmax$) and changes depending on the wavenumber shift value $\Delta k$.
In this description, general expressions (1) to (11) are described in the International System of Units (Si) unless otherwise specified. Specifically, the wavelengths $\lambda 10$, $\lambda 1d$, $\lambda 20$, and $\lambda 2d$ are described in units of (m), and the wavenumber shift $\Delta k$, the lower limit of the observation domain i.e., $\Delta kmim$, and the upper limit of the observation domain, i.e., $\Delta kmax$, are in units of $(m^{-1})$.
Next, the wavenumber shift $\Delta k$ output from the image sensor 170 when the light collected and guided by the light collecting member 20 is dispersed by the spectroscopic unit 150 and projected on the image sensor 170 will be described with reference to Fig. 2C and general expressions (4) to (11), etc. Fig. 2C is a diagram illustrating a change in the projection position in the optical spectrum observation domain with respect to a variation in the wavelength of the primary light.
When the lower and upper limits of the wavenumber shift (Raman shift) corresponding to the range of the optical spectrum for identification evaluation are $\Delta kmin$ and $\Delta kmax$, the wavelength of the primary light is $\lambda 1$, and the wavelength of the secondary light $\lambda 2$ corresponding to the Raman shift $\Delta k$ occurring at the object 900i is $\lambda 2$, the following general expression (4) holds.
[Eq. 4]

General expression (4):

$$\lambda 2(\Delta k) = \frac{1}{\Delta k + \frac{1}{\lambda 1}}$$

The wavelength $\lambda 2$ of the secondary light expressed by general expression (4) is shown to the lower right in Fig. 2C. The wavelength $\lambda 2$ of the secondary light diverges positively to asymptotically approach $\Delta k = -1/\lambda 1$ falling on the negative side of the wavenumber shift $\Delta k = 0$ as the value on the $\Delta k$ axis decreases. The wavelength $\lambda 2$ minor-key decreases with the wavenumber shift $\Delta k$, and minor-key increases with the primary light wavelength $\lambda 1$. The wavelength $\lambda 2$ of the secondary light is thus unambiguously determined for the wavenumber shift $\Delta k$ and the primary light wavelength $\lambda 1$, and expressed by a single function. As will be described below, if the wavelength $\lambda 1$ of the primary light varies, e.g., shifts from $\lambda 1$ to a longer wavelength $\lambda 1 \times p$ (p > 1), the asymptote $\Delta k = -1/\lambda 1$ approaches the $\lambda 2$ axis. The curve expressed by general expression (4) thus deviates to greater values on the wavenumber shift $\Delta k$ axis. Here, as illustrated in Fig. 2C, the upper limit and the lower limit of the wavelength of the secondary light, $\lambda max$ and $\lambda min$, corresponding to the lower limit wavenumber shift and the upper limit wavenumber shift of the observation domain of the wavenumber shift (Raman shift), i.e., $\Delta kmin$ and $\Delta kmax$, shift to longer wavelengths.
Next, at the wavelength $\lambda 2$ of the secondary light, the spectroscopic unit 150 diffracts spectral components at a spectral angle $\Theta$ in accordance with the spectral sensitivity characteristics of the diffraction grating 150, and projects the spectral components so that the imaging unit 170 can acquire the spectral image 280i. The spectral angle $\Theta$ of the spectroscopic unit 150 is described by the following general expression (5).
[Eq. 5]

General expression (5):

$$\Theta = \Theta(\lambda 2)$$

In this embodiment system, the dependence of

the spectral angle $\Theta$ from the spectroscopic unit 150 expressed by general expression (5) on the wavelength $\lambda2$ of the secondary light traces a monotonously increasing curve as illustrated to the upper right of the graph of Fig. 2C, and the spectral angle $\Theta$ is unambiguously described with the secondary light wavelength $\lambda2$. In a modification, the spectral angle $\Theta$ from the spectroscopic unit 150 may be set to minor-key decrease with the secondary light wavelength $\lambda2$. In other words, in both the present embodiment system and the modification, the spectral angle and the wavelength $\lambda2$ of the secondary light are configured to not have a local maximum value or local minimum value and increase monotonously or decrease monotonously within the wavenumber shift band of the observation domain. A function $y = f(x)$ corresponding to a monotonously increasing or monotonously increasing curve means that there is an inverse function $x = G(y) = f^{-1}(y)$.

Similarly, when an element number in the row direction of the image sensor of the imaging unit 170 is EN and the distance from the point of incidence on the diffraction grating of the spectroscopic unit 150 to the imaging unit 170 is D, the element number EN of the element to receive a spectral component corresponding to the wavenumber shift $\Delta k$ is expressed by general expression (6). Here, the distance D is the distance of the normal drawn from the point of incidence on the diffraction grating to the light receiving surface of the image sensor. Parameters a and b are values unambiguously determined by the optical layout for projection. The parameters D, a, and b are values that the correction unit 290 of the identification apparatus 1000 can uniquely acquire as initial values.
[Eq. 6]

General expression (6):

$$EN(\Delta k) = aD \tan \Theta(\lambda2) + b$$

As can be seen in the upper left of the graph of Fig. 2C, the element address EN of the imaging unit, expressed by general expression (6) traces a curve increasing monotonously with the spectral angle $\Theta$. The element address EN is unambiguously described with the spectral angle $\Theta(\lambda2)$.

From general expressions (1) to (6), the element address $EN(\Delta k, \lambda1)$ on the imaging unit 170 where the spectral component of the Raman shift for the primary light wavelength $\lambda1$ corresponding to the excitation wavelength of the light source 25 and the wavenumber shift $\Delta k$ of interest is projected is expressed by general expression (7).
[Eq. 7]

General expression (7):

$$EN(\Delta k, \lambda1) = aD \tan\left\{\Theta\left(\frac{1}{\Delta k + \frac{1}{\lambda1}}\right)\right\} + b$$

Similarly, from general expressions (4) to (6), the wavenumber shift $\Delta k \times r$ projected on the element address $EN(\lambda1, \Delta k)$ expressed by general expression (7) when the primary light wavelength $\lambda1$ corresponding to the excitation wavelength of the light source 25 varies to $p \times \lambda1$ is expressed by general expression (8).
[Eq. 8]

General expression (8):

$$EN(r\Delta k, p\lambda1) = aD \tan\left\{\Theta\left(\frac{1}{r\Delta k + \frac{1}{p\lambda1}}\right)\right\} + b$$

Here, r is the correction value (r), for the wavenumber shift value $\Delta k$ assigned to the output signal from the light reception element of the imaging unit 170, to be multiplied by when the wavenumber shift occurs in the primary light, and corresponds to the amount of correction (r) for the correction unit 290 to apply to the information about the wavenumber shift $\Delta k$. The parameter r may be also referred to as the amount of correction (r), the correction value (r), the ratio of variation (r) to the wavenumber shift value $\Delta k$, or the ratio of change (r) to the wavenumber shift value $\Delta k$.

From general expressions (7) and (8), the tangent function and the parameters a and b that are related to the optical layout and are shared between the two expressions are eliminated, and there holds the following general expression (9).
[Eq. 9]

General expression (9):

$$\Theta\left(\frac{1}{\Delta k + \frac{1}{\lambda1}}\right) = \Theta\left(\frac{1}{r\Delta k + \frac{1}{p\lambda1}}\right)$$

Since the spectral angle $\Theta(\lambda2)$ also uses the area of monotonous increase with respect to the secondary light wavelength $\lambda2$, it is clear that the following general expression (10) holds.
[Eq. 10]

General expression (10):

$$\frac{1}{\Delta k + \frac{1}{\lambda 1}} = \frac{1}{r\Delta k + \frac{1}{p\lambda 1}}$$

From general expression (10), it is clear that the ratio of variation r in the wavenumber shift value that is the basis of the amount of correction is uniquely described by the following general expression (11), using the parameters ($\Delta k$, $\lambda 1$, and p) that the identification apparatus 1000 can acquire.
[Eq. 11]

General expression (11):

$$r(\Delta k, \lambda 1, p) = 1 + \frac{1 - \frac{1}{p}}{\lambda 1 \Delta k}$$

Here, the ratio of change p of the primary light is the ratio of change p of the primary light that the correction unit 290 acquires from the wavelength information wi acquired by the wavelength information acquisition unit 295A (= $\lambda 1 d / \lambda 10$). In other words, the ratio of change p of the primary light is an observed value that the correction unit 290 can successively acquire via the wavelength information acquisition unit 295A as a variation in the operating point of the light source 25. $\lambda 10$ is a predetermined value determined as a standard operating condition of the light source 25, i.e., a value already acquired by the correction unit 290. $\Delta k$ is the wavenumber shift of interest of the spectral image 280i, i.e., a value that the correction unit 290 can acquire in advance at each element address EN of the imaging unit 170.

The correction unit 290 thus corrects the wavenumber shift to be assigned to the signal output from the light receiving element of the imaging unit 170 in the event of a variation p in the excitation wavelength of the light source 25 into r × $\Delta k$ by multiplying the wavenumber shift by (r) times based on general expression (11). In other words, the correction unit 290 can correct the information about the wavenumber shift corresponding to the spectral image 280i into $\Delta k$ × r, based on the wavelength information p and $\lambda 1$ about the wavelength of the primary light. Consider the operation of the correction unit 290 when the wavelength $\lambda 1$ of the primary light varies by p times. Here, the correction unit 290 makes a correction so that the wavenumber shift $\Delta k$ corresponding to the signal output from the light receiving element 350 included in the imaging unit 170 changes by (1 + (1 - 1/p)/($\Delta k$ × $\lambda 1$)) times.

General expression (11) explains that if the Raman shift band of the identification target is fixed and the primary light shifts to longer wavelengths, which corresponds to a ratio of variation p of greater than 1, the wavelength $\lambda 2$ of the secondary light shifts to longer wavelengths and the projection position of the optical spectrum shifts to lower wavenumbers (longer wavelengths). General expression (11) also explains that if the Raman shift band of the identification target is fixed and the primary light shifts to longer wavelengths, which corresponds to a ratio of variation p of greater than 1, the correction factor r for the wavenumber shift $\Delta k$ is greater than 1.

Similarly, general expression (11) explains that if the Raman shift band of the identification target is fixed and the primary light shifts to shorter wavelengths, which corresponds to a ratio of variation p of less than 1, the wavelength $\lambda 2$ of the secondary light shifts to shorter wavelengths and the projection position of the optical spectrum shifts to higher wavenumbers (shorter wavelengths). General expression (11) also explains that if the Raman shift band of the identification target is fixed and the primary light shifts to shorter wavelengths, which corresponds to a ratio of variation p of less than 1, the correction factor r for the wavenumber shift $\Delta k$ is less than 1.

It can also be seen from general expression (11) that in a state where the primary light remains at the reference wavelength, which corresponds to a ratio of variation p of 1, the correction factor r is 1.

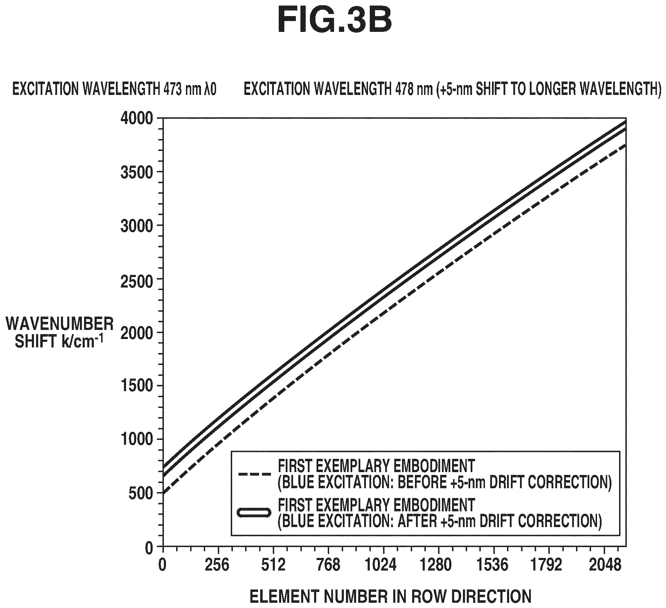

As illustrated in Fig. 3B, the correction unit 290 acquires the correction value r for correcting the wavenumber shift $\Delta k$, based on the ratio of change p of the primary light, the reference wavelength $\lambda 1$ of the primary light, and the wavenumber shift $\Delta k$ of interest, and corrects the spectral information Si from the imaging unit 170. The ratio of change p of the primary light and the reference wavelength $\lambda 1$ of the primary light are included in the wavelength information wi acquired by the wavelength information acquisition unit 295. The not-illustrated display control unit (40) included in the command unit 40 illustrated in Fig. 2A can display information about the amount of correction in the wavenumber shift on the display unit 140.

The identification apparatus 1000 according to the present exemplary embodiment corrects the wavenumber shift of the spectral information Si throughout the observation domain of the spectral wavelength of the primary light by using the correction unit 290. The identification apparatus 1000 according to the present exemplary embodiment can thus acquire an accurate optical spectrum without reducing the rate of operation even if the excitation light from the light source varies in wavelength.

<Second Exemplary Embodiment>

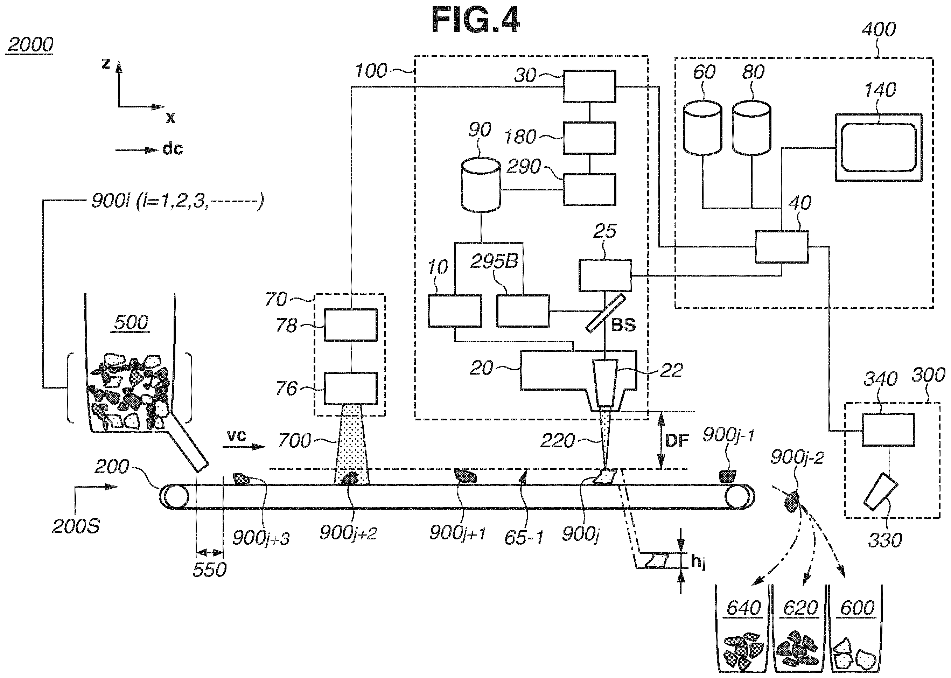

Next, an identification apparatus 2000 according to a second exemplary embodiment will be described with reference to Fig. 4. The identification apparatus 2000 is different from the first exemplary embodiment in including a branching unit BS (beam splitter) that splits excitation light from a light source 25, and a wavelength information acquisition unit 295B that acquires wavelength information about primary light based on branched light branched off from the branching unit BS. The branching unit BS is disposed on an optical path between the light source 25 and an irradiation member 22. The identification apparatus 2000 is also different from the first exemplary embodiment in including a third storage unit 90 that stores spectral information Si before correction of a wavenumber shift, and object number i of ab object 900i, in association with each other.

The wavelength information acquisition unit 295B includes a spectrometer that can read wavelength information about the branched light from the branching unit BS. The wavelength information acquisition unit 295B outputs the acquired wavelength information wi about the primary light to the third storage unit 90.

The third storage unit 90 receives input of an output related to the spectral information Si before the correction of the wavenumber shift from the imaging unit 170 and the wavelength information wi about the primary light from the wavelength information acquisition unit 295B, and stores the information. The information stored in the third storage unit 90 can be read by a correction unit 290.

The third storage unit 90 stores the wavelength information wi to be used by the correction unit 290 to be described below or information corresponding to the wavelength information wi in association with time tp or the object 900i. The information corresponding to the wavelength information wi includes the temperature of an excitation part of the light source 25, a driving frequency, and a duty ratio. In other words, the third storage unit 90 stores the spectral information Si before the correction of the wavenumber shift and the wavenumber information wi in association with the time tp or a unique serial number, such as the object number of the object 900i.

A not-illustrated neutral density filter can be disposed between the wavenumber information acquisition unit 295B and the branching unit BS.

Like the identification apparatus 1000, the identification apparatus 2000 according to the present exemplary embodiment corrects the wavenumber shift of the spectral information Si throughout the observation domain of the spectral wavelength of the primary light by using the correction unit 290. The identification apparatus 2000 according to the present exemplary embodiment can thus acquire an accurate optical spectrum without reducing the rate of operation even if the excitation light from the light source varies in wavelength.

<Third Exemplary Embodiment>

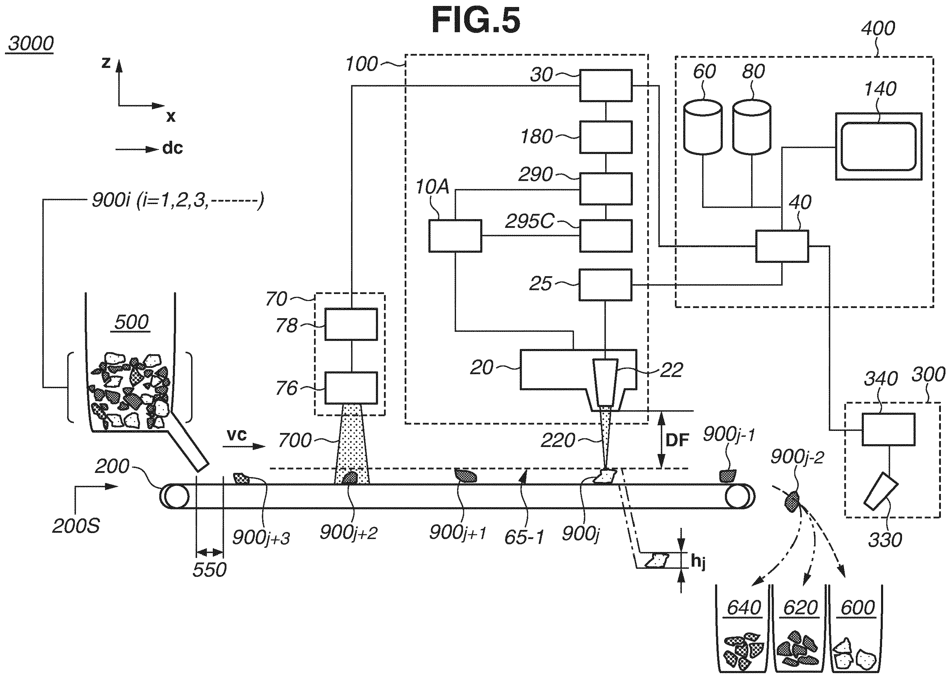

Next, an identification device 3000 according to a third exemplary embodiment will be described with reference to Fig. 5. The identification device 3000 is different from the first and second exemplary embodiments in including a wavelength information acquisition unit 295C that acquires wavelength information about primary light, based on a Rayleigh scattering component included in secondary light from an object 900i. A branching unit BS is disposed on an optical path between a light source 25 and an irradiation member 22. The identification device 3000 is also different from the first and second exemplary embodiments in including a spectral image acquisition unit 10A including a not-illustrated imaging unit so that an image of the Rayleigh scattering component that an illustrated spectroscopic unit 150 disperses to higher wavenumber than a Raman scatting light component can be captured.

The identification apparatuses 1000, 2000, 3000 and the like described in this description are configured to disperse a Stokes light component that shifts to lower wavenumbers than the excitation light (primary light), and acquire a Raman scattered light spectrum based on the Stokes light. Rayleigh scattered light is an elastically scattered component of the primary light without interaction with the object, and serves as the ground for identifying the wavelength information about the primary light.

Like the identification apparatus 1000, the identification device 3000 according to the present exemplary embodiment corrects the wavenumber shift of spectral information Si throughout the observation domain of the spectral wavelength of the primary light by using a correction unit 290. The identification device 3000 according to the present exemplary embodiment can thus acquire an accurate optical spectrum without reducing the rate of operation even if the excitation light from the light source varies in wavelength.

<Fourth Exemplary Embodiment>

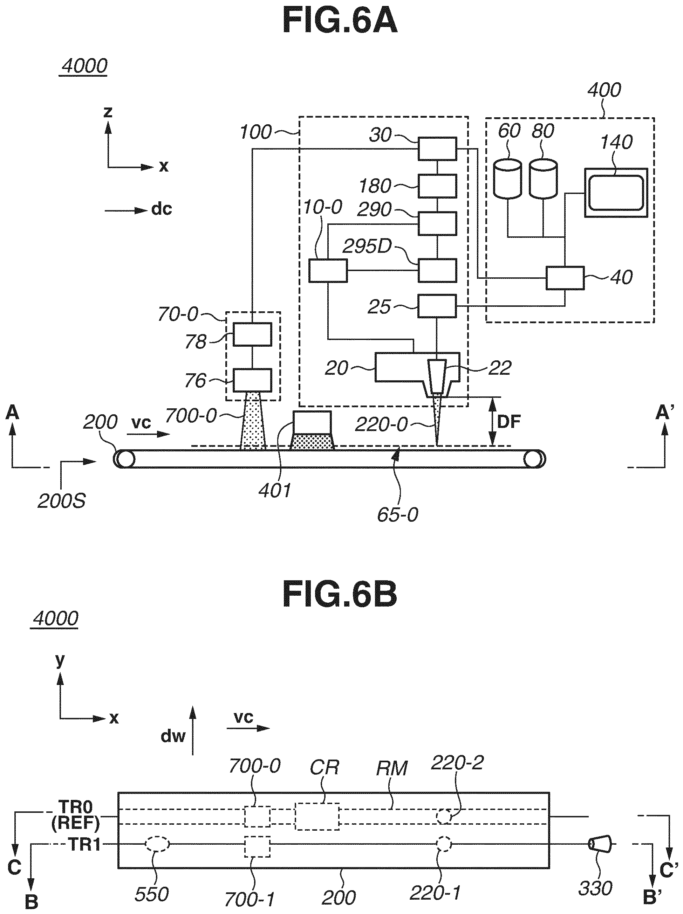

Next, an identification apparatus 4000 according to a fourth exemplary embodiment will be described with reference to Figs. 6A and 6B. The identification apparatus 4000 is different from each of the identification apparatuses 1000, 2000, and 3000 in including a wavelength information acquisition unit 295D that acquires the wavelength information, based on secondary light from a reference object RM. As illustrated in Fig. 6B, the identification apparatus 4000 is different from the identification apparatuses 1000, 2000, and 3000 in that a placement unit 200 includes a track TR0 on which a tube-like reference object RM, which moves in parallel with a track TR1 where objects 900i are conveyed, is disposed.

An object having a unimodal Raman shift peak within a predetermined wavenumber shift range is employed as the reference object RM. A wavenumber shift range of 100 $cm^{-1}$ and more is employed as the predetermined wavenumber shift range. Since the Raman shift peak is unimodal, the full width at half maximum FWHM is desirably 50 $cm^{-1}$ or less. The full width at half maximum may otherwise be referred to as a half-value width. The reference object RM is desirably made of a substance having a simple molecular structure rather than complex, containing less accessory components, and being of high purity. A material stable against ultraviolet rays, chemicals, temperature, and moist atmospheres is selected as the reference object RM in accordance with the installation environment of the identification apparatus. An organic compound containing a resin, such as polystyrene, polyethylene, and polyimide, a carbon allotrope, such as graphite, or the like is employed as the reference object RM. A milky white object opaque to the primary light is employed as the reference object RM because Raman scattered light of high intensity can be easily obtained from the incident surface and inside of the reference object RM.

Rayleigh scattered light may be used as the secondary light from the reference object RM instead of Raman scattered light. The fourth exemplary embodiment modified to use the Rayleigh scattered light from the reference object RM can be said to be a modification of the identification device 3000 according to the third exemplary embodiment.

In a modification, the reference object RM is disposed on the conveyance track TR1 where object 900i are conveyed, without providing a track dedicated to the reference object RM. In such a modification, the reference object RM may be installed on a belt conveyor serving as the background for a spot where light is received from the objects 900i. The present exemplary embodiment including the track TR dedicated to the reference object RM is advantageous in that contaminants from the objects 900i are less likely to adhere to the reference object RM and that a focal plane 65-0 for the reference object RM is easy to focus on. The present exemplary embodiment including the track TR dedicated to the reference object RM can be said to be a configuration where the reference object RM is disposed at a position not overlapping the placed objects 900i on the placement unit.

In the identification apparatus 4000, a focal length DF on the track TR0 is made longer than on the track TR1 in view of the height of the reference object RM from a placement surface 200S. More specifically, the focal plane 65-0 of primary light 220-0 corresponding to the track TR0 is adjusted to be lower than a focal plane 65-1 of primary light 220-1 corresponding to the track TR1. The focal plane 65-1 is set based on statistic information about the group of objects 900i (i = 0, 1, 2, ...) to be placed on the track TR1.

The identification apparatus 4000 includes a cleaning unit 401 that cleans a partial area CR of the track TR0 for the purpose of maintaining the cleanliness of the reference object RM. The cleaning unit 401 employes dry cleaning using an ultraviolet (UV) lamp, a UV-ozone asher, etc. The cleaning unit 401 may continuously perform the cleaning in coordination with the operation of the identification apparatus 4000, intermittently based on the passage of objects 900i being conveyed, or adaptively based on the degree of contamination of the objects 900i being conveyed. The intermittent or adaptive cleaning operation reduces degradation of the reference object RM disposed on the track TR0, such as sputtering and etching due to overcleaning, or a reduction in thickness. The intermittent or adaptive cleaning operation by the cleaning unit 401 can be performed based on information from a form information acquisition unit 70-0 disposed with its imaging field of view 700-0 overlapping the track TR0 like the track TR1.

The cleaning unit 401 may be replaced with other methods, such as an air nozzle for spraying compressed air and a brush with conductive bristles, or configured to use a plurality of techniques in combination.

Like the identification apparatus 1000, the identification apparatus 4000 according to the present exemplary embodiment corrects the wavenumber shift of spectral information Si throughout the observation domain of the spectral wavelength of the primary light using a correction unit 290. The identification apparatus 4000 according to the present exemplary embodiment can thus acquire an accurate optical spectrum without reducing the rate of operation even if the excitation light from the light source varies in wavelength.

<Fifth Exemplary Embodiment>

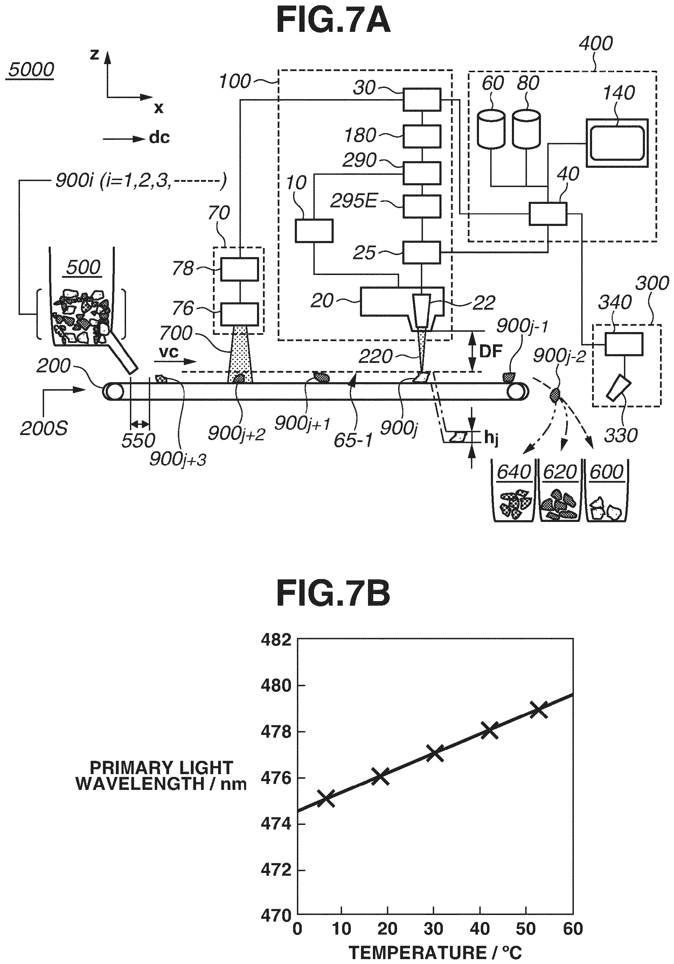

Next, an identification apparatus 5000 according to a fifth exemplary embodiment will be described with reference to Figs. 7A and 7B. The identification apparatus 5000 is different from each of the identification apparatuses 1000, 2000, 3000, and 4000 in including a wavelength information acquisition unit 295E that acquires wavelength information about primary light based on information about the driving state of a light source 25. The wavelength information acquisition unit 295E according to the present exemplary embodiment acquires the temperature of the metal casing of a coherent amplifying network (CAN) semiconductor laser included in the light source 25 as the temperature of the light source 25. The metal casing also serves as a heat radiator of the semiconductor laser.

The wavelength information acquisition unit 295E outputs wavelength information wi about the primary light to a correction unit 290, based on the acquired light source temperature and the dependence of the excitation wavelength on the light source temperature, illustrated in Fig. 7B. The information about the driving state of the light source 25 includes at least one of the temperature of the casing part of the light source 25, the temperature of an oscillation part of the light source 25, the power consumption of the light source 25, the amount of heat radiation of the light source 25, and the like.

Like the identification apparatus 1000, the identification apparatus 5000 according to the present exemplary embodiment corrects the wavenumber shift of the spectral information Si throughout the observation domain of the spectral wavelength of the primary light using the correction unit 290. The identification apparatus 5000 according to the present exemplary embodiment can thus acquire an accurate optical spectrum without reducing the rate of operation even if the excitation light from the light source varies in wavelength.

The present invention is not limited to the foregoing exemplary embodiments, and various changes and modifications can be made without departing from the spirit or scope of the present invention. The following claims are therefore appended to make the scope of the present invention public.

This application claims the benefit of priority based on Japanese Patent Application No. 2021-116435, filed on July 14, 2021, the entire contents of which are herein incorporated by reference.

**Claims**

1.  An identification apparatus comprising:

    a placement unit configured to place an object thereon; an irradiation member optically coupled to a light source and configured to irradiate the object placed on the placement unit with primary light; a light collecting member configured to collect secondary light from the object;
    a spectroscopic unit configured to disperse the secondary light collected by the light collecting member; an imaging unit configured to capture an optical spectrum dispersed by the spectroscopic unit to acquire a spectral image, the identification apparatus being configured to identify a property of the object based on the spectral image; and
    a correction unit configured to correct information about a wavenumber shift corresponding to the spectral image based on wavelength information about a wavelength of the primary light.

2.  The identification apparatus according to Claim 1, further comprising a wavelength information acquisition unit configured to acquire the wavelength information.

3.  The identification apparatus according to Claim 2, further comprising a storage unit configured to store information about the optical spectrum output by the imaging unit in association with the wavelength information.

4.  The identification apparatus according to Claim 3, wherein the correction unit is configured to correct the information about the wavenumber shift of the optical spectrum, based on information about the optical spectrum stored in the storage unit.

5.  The identification apparatus according to any one of Claims 1 to 4, further comprising an acquisition unit configured to acquire information for identifying a property of the object, based on the optical spectrum.

6.  The identification apparatus according to any one of Claims 1 to 5, wherein the wavelength information acquisition unit is configured to acquire the wavelength information based on information about the primary light output from the light source.

7.  The identification apparatus according to any one of Claims 1 to 5, further comprising a branching unit disposed between the light source and the irradiation member and configured to branch excitation light, wherein the wavelength information acquisition unit is configured to acquire the wavelength information based on branched light branched off from the branching unit.

8.  The identification apparatus according to any one of Claims 1 to 5, wherein the wavelength information acquisition unit is configured to acquire the wavelength information, based on a Rayleigh scattering component included in the secondary light.

9.  The identification apparatus according to any one of Claims 1 to 5, wherein the wavelength information acquisition unit is configured to acquire the wavelength information, based on secondary light from a reference object.

10. The identification apparatus according to Claim 9, wherein the reference object is disposed in an area not overlapping an area where the object is placed in the placement unit.

11. The identification apparatus according to Claim 9 or 10, comprising a cleaning unit configured to clean the reference object.

12. The identification apparatus according to any one of Claims 1 to 5, wherein the wavelength information acquisition unit is configured to acquire the wavelength information, based on information about a driving state of the light source.

13. The identification apparatus according to Claim 12, wherein the information about the driving state is information about at least one of a temperature, power consumption, and an amount of heat radiation of an oscillation part of the light source.

14. The identification apparatus according to any one of Claims 1 to 13, further comprising a display control unit configured to display the optical spectrum of the object on a display unit, the wavenumber shift of the optical spectrum being corrected.

15. The identification apparatus according to Claim 14, wherein the display control unit is configured to display information about an amount of correction in the wavenumber shift on the display unit.

16. The identification apparatus according to any one of Claims 1 to 15, wherein the imaging unit includes a plurality of two-dimensionally arranged light receiving elements.

17. The identification apparatus according to any one of Claims 1 to 16, wherein the correction unit is configured to, when a wavelength related to that of the primary light increases, perform a correction to increase the wavenumber shift output by the imaging unit.

18. The identification apparatus according to any one of Claims 1 to 17, wherein the correction unit is configured to, when a wavelength $\lambda 1$ of the primary light varies by p times, perform a correction so that the wavenumber shift $\Delta k$ corresponding to a light receiving element changes by $(1 + (1 - 1/p)/(\Delta k \times \lambda 1))$ times, the wavenumber shift $\Delta k$ being output by the imaging unit.

# FIG.1

EP 4 350 331 A1

# FIG.2A

# FIG.2B

# FIG.2C

# FIG.3A

EXCITATION WAVELENGTH 473 nm λ0     EXCITATION WAVELENGTH 478 nm (+5-nm SHIFT TO LONGER WAVELENGTH)

WAVENUMBER SHIFT k/cm$^{-1}$ (y-axis: 0, 500, 1000, 1500, 2000, 2500, 3000, 3500, 4000)

ELEMENT NUMBER IN ROW DIRECTION (x-axis: 0, 256, 512, 768, 1024, 1280, 1536, 1792, 2048)

—— FIRST EXEMPLARY EMBODIMENT (BLUE EXCITATION: 478 nm)
- - - FIRST EXEMPLARY EMBODIMENT
(BLUE EXCITATION: BEFORE +5-nm DRIFT CORRECTION)

# FIG.3B

EXCITATION WAVELENGTH 473 nm λ0    EXCITATION WAVELENGTH 478 nm (+5-nm SHIFT TO LONGER WAVELENGTH)

WAVENUMBER SHIFT k/cm$^{-1}$ (y-axis)

ELEMENT NUMBER IN ROW DIRECTION (x-axis)

FIRST EXEMPLARY EMBODIMENT
(BLUE EXCITATION: BEFORE +5-nm DRIFT CORRECTION)
FIRST EXEMPLARY EMBODIMENT
(BLUE EXCITATION: AFTER +5-nm DRIFT CORRECTION)

# FIG.4

EP 4 350 331 A1

**FIG.5**

# FIG.6A

# FIG.6B

EP 4 350 331 A1

# FIG.7A

# FIG.7B

24

# EP 4 350 331 A1

| INTERNATIONAL SEARCH REPORT | International application No. |
|---|---|
| | **PCT/JP2022/026354** |

**A.    CLASSIFICATION OF SUBJECT MATTER**

*G01N 21/65*(2006.01)i
FI:    G01N21/65

According to International Patent Classification (IPC) or to both national classification and IPC

**B.    FIELDS SEARCHED**

Minimum documentation searched (classification system followed by classification symbols)

G01N21/65; G01J3/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2019/111785 A1 (CANON INC.) 13 June 2019 (2019-06-13) paragraphs [0012], [0015], [0039], [0049], [0050], fig. 1-3 | 1-11, 14-18 |
| A | | 12-13 |
| Y | JP 2011-214917 A (SAIMU CORP.) 27 October 2011 (2011-10-27) claim 6, paragraphs [0017], [0051]-[0053], [0057] | 1-11, 14-18 |
| A | | 12-13 |
| Y | JP 2013-36971 A (ARIKATA, Kazuyoshi) 21 February 2013 (2013-02-21) paragraph [0048] | 1-11, 14-18 |
| A | | 12-13 |
| A | JP 2011-17607 A (BECKMAN COULTER, INC.) 27 January 2011 (2011-01-27) paragraph [0042] | 1–18 |
| A | JP 2004-4112 A (RIKEN) 08 January 2004 (2004-01-08) paragraph [0009] | 1-18 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

# EP 4 350 331 A1

<table>
<tr><td colspan="2" align="center">INTERNATIONAL SEARCH REPORT</td><td colspan="2">International application No.<br><b>PCT/JP2022/026354</b></td></tr>
</table>

**C.**     **DOCUMENTS CONSIDERED TO BE RELEVANT**

| Category* | Citation of document, with indication, where appropriate, of the relevant passages | Relevant to claim No. |
|---|---|---|
| A | JP 2005-114540 A (HORIBA, LTD.) 28 April 2005 (2005-04-28)<br>claim 1, paragraph [0042] | 1–18 |
| A | JP 2012-122851 A (ST JAPAN INC.) 28 June 2012 (2012-06-28)<br>paragraph [0027] | 1–18 |
| A | WO 2013/069561 A1 (HOYA CORP.) 16 May 2013 (2013-05-16)<br>paragraph [0034] | 1–18 |
| A | US 2008/0192992 A1 (MOSHE, Danny S.) 14 August 2008 (2008-08-14) | 1–18 |

Form PCT/ISA/210 (second sheet) (January 2015)

**INTERNATIONAL SEARCH REPORT**
Information on patent family members

International application No.

**PCT/JP2022/026354**

| Patent document cited in search report | | | Publication date (day/month/year) | Patent family member(s) | | | Publication date (day/month/year) |
|---|---|---|---|---|---|---|---|
| WO | 2019/111785 | A1 | 13 June 2019 | US 2020/0300704 A1 paragraphs [0016], [0019], [0047], [0059], [0061], fig. 1-3 JP 2020-3501 A JP 2019-105628 A | | | |
| JP | 2011-214917 | A | 27 October 2011 | JP 5143175 B2 | | | |
| JP | 2013-36971 | A | 21 February 2013 | JP 4932053 B1 | | | |
| JP | 2011-17607 | A | 27 January 2011 | (Family: none) | | | |
| JP | 2004-4112 | A | 08 January 2004 | (Family: none) | | | |
| JP | 2005-114540 | A | 28 April 2005 | (Family: none) | | | |
| JP | 2012-122851 | A | 28 June 2012 | (Family: none) | | | |
| WO | 2013/069561 | A1 | 16 May 2013 | JP 2013-122437 A | | | |
| US | 2008/0192992 | A1 | 14 August 2008 | GB 2425832 A WO 2005/055155 A2 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008209128 A
- JP 2011214917 A
- JP 2021116435 A